# EUROPÄISCHE PATENTSCHRIFT

(11) **EP 2 159 197 B1**
(45) Veröffentlichungstag und Bekanntmachung des Hinweises auf die Patenterteilung: **11.07.2012**
(21) Anmeldenummer: 09010641.0
(22) Anmeldetag: 19.08.2009
(51) Int. Cl.: B01D 61/02, B01D 61/14, C02F 1/44, C02F 5/02, B01D 65/08, B01D 61/16, C02F 1/46

(54) **Verfahren und Vorrichtung zur Behandlung von Wasser**
Method and device for treating water
Procédé et dispositif destinés au traitement d'eau

(30) Priorität: 25.08.2008 DE 102008039447
(43) Veröffentlichungstag der Anmeldung: 03.03.2010
(73) Patentinhaber: Flettner, Marc, 40629 Düsseldorf (DE)
(72) Erfinder: Flettner, Marc, 40629 Düsseldorf (DE)
(74) Vertreter: Cohausz Hannig Borkowski Wißgott

(56) Entgegenhaltungen:
- WO-A-2006/081688
- DE-A1- 10 146 961
- JP-A- 2002 361 287
- US-A1- 2003 230 522
- US-A1- 2004 144 707
- LISITSIN ET AL: "Inhibition of CaCO3 scaling on RO membranes by trace amounts of zinc ions" DESALINATION, ELSEVIER, AMSTERDAM, NL, Bd. 183, Nr. 1-3, 1. November 2005 (2005-11-01), Seiten 289-300, XP005149555 ISSN: 0011-9164
- MING X ET AL: "Interaction of ions in water system containing copper-zinc alloy for boiler energy saving" RARE METALS - XIYOU JINSHU, PRESS OF METALLURGICAL INDUSTRY, BEIJING, CN, Bd. 25, Nr. 6, 1. Oktober 2006 (2006-10-01), Seiten 405-410, XP022935104 ISSN: 1001-0521 [gefunden am 2006-10-01]
- COETZEE P P ET AL: "Scale reduction and scale modification effects induced by Zn and other metal species in physical water treatment" WATER SA, PRETORIA, SA, Bd. 24, Nr. 1, 1. Januar 1998 (1998-01-01), Seiten 77-84, XP002466508 ISSN: 0378-4738
- JITKA MACADAM ET AL: "Calcium carbonate scale formation and control" RE/VIEWS IN ENVIRONMENTAL SCIENCE & BIO/TECHNOLOGY, KLUWER ACADEMIC PUBLISHERS, DO, Bd. 3, Nr. 2, 1. Juni 2004 (2004-06-01), Seiten 159-169, XP019265768 ISSN: 1572-9826

## Beschreibung

Die Erfindung betrifft ein Verfahren und eine Vorrichtung zur Behandlung von Wasser, bei dem Wasser durch wenigstens eine Membranfilteranlage mit wenigstens einem Membranfilter geführt wird und aus dem Wasser Partikel ausgefiltert werden, die größer sind als die Poren des wenigstens einen Membranfilters, wobei der wenigstens einen Membranfilteranlage in Strömungsrichtung des Wassers eine Wasserbehandlungsvorrichtung vorgeschaltet wird, in der eine Behandlung des Wassers durchgeführt wird, mit welcher durch Abgabe von Zinkionen in das Wasser in einer Zink-Opferanoden-Anordnung der im Wasser gelöste Kalk zumindest teilweise in Calziumcarbonatpartikel überführt wird.

Der wenigstens einen Membranfilteranlage wird weiter eine zweite, wirkungsgleiche Wasserbehandlungsvorrichtung nachgeschaltet, mit welcher Zinkionen in das Wasser eingetragen werden, die zumindest zum Teil diejenigen Zinkionen ersetzen, die von der in Strömungsrichtung früheren Wasserbehandlungsanlage in das Wasser eingetragen und in der Mikro- oder Ultrafiltrations-Membranfilteranlage ausgefiltert wurden und mit denen eine Calziumcarbonatpartikelbildung des im Wasser verbliebenen gelösten Kalk erfolgt.

Membranfilteranlagen sind am Markt in vielfältiger Ausführung bekannt und werden von einer Vielzahl von Firmen angeboten. Es handelt sich bei der Membranfiltration um ein spezielles Verfahren der Filtration, bei der durch eine dünne Membran gefiltert wird, welche auch besonders kleine Partikel zurückhalten kann. Es handelt sich bei einer solchen Membran um eine dünne, feinporige Wand, die im Wesentlichen alle Partikel oberhalb einer bestimmten Größe zurückhält und kleinere Partikel ungehindert und im Wesentlichen ohne Verluste durchlässt, so dass eine derartige Membran eine hohe Selektivität aufweist.

Dabei ist es bekannt, dass im einfachsten Fall eine zu filtrierende Flüssigkeit, wie in dieser Anwendung beispielsweise Wasser, durch die Filtermembran hindurchgedrückt oder hindurchgesaugt werden. Diejenigen Partikel oder Moleküle, welche die Filtermembran nicht passieren, werden auf der Membran angelagert und können einen sogenannten Filterkuchen ausbilden. Es ist daher notwendig, diese Anlagerungen von Zeit zu Zeit zu entfernen, um die Funktionsfähigkeit einer Membranfilteranlage kontinuierlich gewährleisten zu können: Für diesen Zweck stellen Membranfilteranlagen üblicherweise einen entsprechenden Spülanschluss zur Verfügung.

Bei der Membranfiltration bzw. dem Einsatz entsprechender Membranfilteranlagen werden im Wesentlichen mehrere, nachfolgend aufgelistete Filterverfahren unterschieden.

So umfasst die Membranfiltration das Prinzip der Mikrofiltration, bei der abtrennbare Stoffe in einer Größe von größer 0,1 Mikrometer ausgefiltert werden, das Prinzip der Ultrafiltration, bei der Stoffe im Bereich von 0,1 Mikrometer bis 0,01 Mikrometer ausgefiltert werden, den Bereich der Nanofiltration, bei dem Stoffe von etwa 0,01 Mikrometer bis 0,001 Mikrometer ausgefiltert werden sowie das Prinzip der Umkehrosmose für noch kleinere Teilchen, im Wesentlichen im Bereich bis 0,0001 Mikrometern.

Da bei den beiden letztgenannten Filtrationsverfahren zum Teil sehr hohe Druckdifferenzen zwischen den Membranfilterseiten erforderliche sind, wird unter einer Membranfilteranlage im Sinne der hier beschriebenen Erfindung in bevorzugter Weise eine solche Anlage verstanden, die geeignet ist, die eingangs genannten Prinzipien der Mikrofiltration bzw. der Ultrafiltration durchzuführen, da bei diesen bevorzugten Filtrationsverfahren Druckdifferenzen im Bereich von 0,1 bis 5 bar zwischen den Membranseiten ausreichend sind und somit eine derartige Membranfilteranlage einen bevorzugten Einsatz in der Hauswassertechnik finden kann, wo üblicherweise durch den Stadtwasseranschluß der benötigte Wasserdruckbereich zur Verfügung gestellt wird.

Aufgrund des Einsatzgebietes von Membranfilteranlagen zum Ausfiltern sehr kleiner, im Wesentlichen sogar submikrometergroßer Teilchen, bevorzugt im Bereich von 1 - 0,01 Mikrometer, ist es bei den Membranfilteranlagen als Nachteil bekannt, dass diese durch gelösten Kalk im Wasser sehr leicht verstopfen können, wenn sich der Kalk aus der Lösung im Wasser bei den feinen Poren der Membranfilter ablagert. Da es sich hierbei um ein Anwachsen einer Kalkschicht aus der gelösten Phase im Wasser handelt, lassen sich derartige Kalkanwachsungen auch nicht durch das übliche Spülverfahren, wie es bei Membranfilteranlagen zur Abtragung eines Filterkuchens bekannt ist, entfernen. Dies liegt im Wesentlichen auch mit daran, dass aus der Lösung im Wasser der Kalk als Kalziumkarbonatanwachsung im Wesentlichen in der calzitischen kristallinen Form an der Membran abgeschieden wird und daher eine sehr hohe Haftung an der Membran aufweist.

Es ist daher im bisherigen Stand der Technik bekannt, derartige Membranfilteranlagen nur in Kombination mit einer Wasserenthärtungsanlage zu betreiben, die in Strömungsrichtung der Membranfilteranlage vorgeschaltet ist und dafür Sorge trägt, dass der im Wasser vorhandene Kalk entfernt wird, insbesondere dadurch, dass die im Wasser gelösten Kalkionen ausgetauscht werden gegen andere Ionen, üblicherweise Natriumionen, um das Anwachsen von Kalk aus der gelösten Phase im Wasser an den Membranfiltern zu verhindern.

Dabei wird es weiterhin als nachteilig empfunden, dass derartige lonentauscheranlagen zur Wasserenthärtung ebenfalls einer regelmäßigen Wartung bedürfen, beispielsweise zum Zweck der Regeneration der Ionentauscher. Dabei ist es wichtig, eine derartige Regeneration konsequent durchzuführen, da der Verlust der Wirkungsweise bei der Ionentauscheranlage zur Zerstörung der Filtermembran durch anwachsende kristalline Kalkschichten führen kann und demnach in einer nachfolgenden Wartung die Membranfilter nicht lediglich durch eine Spülung von einem Filterkuchen befreit werden können, sondern ausgetauscht werden müssen. Dabei ist es auch aus Sicht des Umweltschutzes nachteilig, dass für den Prozeß der Regeneration ein hoher Wasserverbrauch und Materialverbrauch (Regenerationssalz) gegeben ist.

Nachteilig ist auch der Ionenaustauschprozeß an sich für den Menschen, der das behandelte Wasser konsumiert, da Natriumionen in zu hohen Dosierungen auch als gesundheitsschädlich eingestuft werden können.

Aus dem Stand der Technik gemäß den Veröffentlichungen US 2003/0230522 A1 und "Inhibition of CaCO3-scaling on RO membranes by trace amounts of zinc ions" von Dmitry Lisitsin et al. in DESALINATION 183 (2005) 289-300 ist es ebenfalls bekannt, Umkehrosmoseanlagen zur Erstellung von Reinstwasser durch eine vorgeschaltete Wasserbehandlungsvorrichtung vor einer Verkalkung zu schützen und ein Nachlassen der Permeabilität mit der Zeit zu verringern.

Aufgabe der vorliegenden Erfindung ist es, ein Verfahren und eine Vorrichtung bereitzustellen, mit welchem eine Wasserenthärtung mittels einer Membranfilteranlage erreicht wird unter Vermeidung jeglicher Gesundheitsrisiken durch den Einsatz von Ionentauscheranlagen.

Die Aufgabe wird zum Einen dadurch gelöst, dass bei einem Verfahren der eingangs genannten Art die genannte Wasserbehandlungsvorrichtung einer Mikro- oder Ultrafütrations-Membranfilteranlage zur Ausfilterung von Teilchen im Bereich von 1 bis 0.01 Mikrometer in Strömungsrichtung vorgeschaltet wird und eine wirkungsgleiche Wasserbehandiungsvorrichtung der Mikro- oder Ultrafiltrations-Membranfilteranlage nachgeschaltet wird, wobei mittels der nachgeschalteten Wasserbehandlungsvorrichtung Zinkionen in das Wasser eingetragen werden, die zumindest zum Teil diejenigen Zinkionen ersetzen, die von der in Strömungsrichtung früheren Wasserbehandlungsanlage in das Wasser eingetragen und aufgrund von Calziumcarbonatpartikelbildung an diesen Ionen als Partikelbildungskeime in der Mikro- oder Ultrafiltrations-Membranfilteranlage ausgefiltert wurden und mit denen eine Calziumcarbonatpartikelbildung des im Wasser verbliebenen gelösten Kalks erfolgt.

Es ist daher zum Anderen erfindungsgemäß vorgesehen, die wenigstens eine Membranfilteranlage als Mikro- oder Ultrafiltrations-Membranfilteranlage zur Ausfilterung von Teilchen im Bereich von 1 bis 0.01 Mikrometer auszubilden, der eine wirkungsgleiche Wasserbehandlungsvorrichtung nachgeschaltet ist, wobei mittels der nachgeschalteten Wasserbehandlungsvorrichtung Zinkionen in das Wasser eintragbar sind, die zumindest zum Teil diejenigen Zinkionen ersetzen, die von der in Strömungsrichtung früheren Wasserbehandlungsanlage in das Wasser eingetragen und aufgrund von Calziumcarbonatpartikelbildung an diesen Ionen als Partikelbildungskeime in der Mikro- oder Ultrafiltrations-Membranfilteranlage ausgefiltert sind und mit denen eine Calziumcarbonatpartikelbildung des im Wasser verbliebenen gelösten Kalks erzeugbar ist.

So ist festgestellt worden, dass Wasserbehandlungsvorrichtungen, die dem Wasser Metallionen und hier besonders bevorzugt Zinkionen zusetzen, dazu führen, dass das im Wasser gelöstes Kalziumkarbonat in Kalziumkarbonatpartikel überführt werden kann, wobei diese Kalziumkarbonatpartikel überwiegenderweise und bei entsprechend hoher Metallionenkonzentration im Wasser ausschließlich in der kristallinen Aragonit-Form gebildet werden. Dieser Effekt wird darauf zurückgeführt, dass die im Wasser zugeführten Metallionen und hier besonders bevorzugt die Zinkionen, einen Kristallisationskeim bilden, an dem das Kalziumkarbonat kristallisiert.

Es wurde dabei herausgefunden, dass die Kombination einer Membranfilteranlage mit einer in Strömungsrichtung vorgeschalteten Wasserbehandlungsvorrichtung dieser genannten Art eine besonders vorteilhafte Wirkung erzielt, obwohl sich für den Fachmann in erster Linie bei einer zunächst nur oberflächlichen Betrachtung der Einsatz einer derartigen Wasserbehandlungsvorrichtung in Verbindung mit einer Membranfilteranlage kategorisch verbietet, da eine solche Wasserbehandlungsvorrichtung nicht zu einer Enthärtung des Wassers führt, wie es für den Betrieb einer Membranfilteranlage ansonsten gemäß den Kenntnissen aus dem bisherigen Stand der Technik zwingend notwendig ist. Bei den hier beschriebenen Wasserbehandlungsvorrichtungen wird nämlich im Gegensatz zu lonentauscheranlagen keine Wasserenthärtung durchgeführt, da der Kalk bzw. die Kalziumionen auch nach der Behandlung mit einer solchen Wasserbehandlungsanlage im Wasser verbleibt und somit der grundsätzliche Härtegrad des Wassers unverändert bleibt.

Es hat sich jedoch überraschenderweise gezeigt, dass der Einsatz einer derartigen Wasserbehandlungsvorrichtung im Einsatz vor einer Membranfilteranlage besondere Vorteile bietet, die darin liegen, dass neben der Bildung von Kalziumkarbonatpartikein diese Partikel darüber hinaus zumindest überwiegend auch in der kristallinen Aragonit-Form vorliegen.

Es handelt sich gegenüber den kalzitischen Partikeln hierbei um eine Form in überwiegend orthorhombischer Form, die eine geringere Neigung zur Anhaftung an Oberflächen aufweist als Kalzitkristalle. So bewirkt eine Wasserbehandlungsvorrichtung dieser Art zwar keine Enthärtung des Wassers im eigentlichen Sinne, wie es für eine Membranfilteranlage zwingend notwendig wäre, es wird jedoch durch die Überführung des gelösten Kalks in Kalziumkarbonatpartikeln, bevorzugt überwiegend in der Aragonit-Form, erreicht, dass Anwachsungen von Kalk aus der gelösten Phase im Wasser an den Membranfiltern nicht auftreten können bzw. über lange Zeit verhindert werden, da der Kalk bereits in eine kristalline Partikelform vor dem Eintreffen in die Membranfilteranlage überführt ist.

Die so entstandenen Kalziumkarbonatpartikel werden an der Membranfilteroberfläche einer eingesetzten Membranfilteranlage ausgefiltert, verhalten sich dabei jedoch, wie im Wesentlichen auch alle anderen Teile und Stoffe, die aus dem Wasser bei einer bestimmten eingesetzten Porengröße der Membranfilter ausgefiltert werden und können somit mit dem Filterkuchen bei den üblichen Spülmaßnahmen eines Membranfilters ausgespült werden, ohne an der Membranfilteroberfläche anzuhaften, was neben der Tatsache, dass Kristallpartikel gebildet wurden, auch maßgeblich mit darauf zurückgeführt wird, dass es sich um Kristallpartikel überwiegend oder ausschließlich in der Aragonit-Form statt der Kalzitform handelt. Es kann daher eine vorgeschaltete Wasserbehandiungsvorrichtung dieser genannten Art zu einem sicheren Betrieb einer Membranfilteranlage wider Erwarten beitragen, obwohl eine effektive Wasserenthärtung, wie sie bislang im Stand der Technik für Membranfilteranlagen gefordert wird, nicht stattfindet.

Darüber hinaus haben diese Wasserbehandlungsvorrichtungen, bei denen Zinkionen in das Wasser eingetragen werden, den weiteren Vorteil, im Wesentlichen wartungsfrei zu sei, da kein signifikanter Verbrauch eines Verbrauchsmaterials stattfindet, abgesehen von der langsamen Aufzehrung des Zinkmaterials in einer solchen Wasserbehandlungsvorrichtung, was jedoch Jahre in Anspruch nehmen kann, so dass hier entsprechend große Wartungszyklen gegeben sind. Gegenüber lonentauscheranlagen sind solche Vorrichtungen auch wesentlich umweltfreundlicher, da keine Regeneration nötig ist und somit keine zusätzlicher Verbrauch von Wasser und Regenerationsmaterialien anfällt. Insgesamt gestaltet sich der Einsatz einer solchen Wasserbehandlungsvorrichtung somit auch preiswerter.

So ist es erfindungsgemäß vorgesehen, in den Wasserbehandlungsvorrichtungen Zinkionen mittels einer sogenannten Zink-Opferanoden-Anordnung in das Wasser einzutragen, wofür eine derartige Wasserbehandlungsvorrichtung beispielsweise rohrförmig ausgebildet sein kann, um in Wasserleitungswege eingebaut werden zu können und eine z.B. durchspülte und/oder umspülte Zinkopferanode aufweist, die in einem elektrischen leitenden Kontakt mit dem umgebenden Metall, wie beispielsweise Messing steht, um so eine elektrochemische Potentialdifferenz aufzubauen und das galvanische Opferanodenprinzip zu realisieren, bei der statt der Aufzehrung des edleren Metalls hier das unedlere Zink in Lösung geht und somit die Zinkionen in das Wasser überführt werden.

Wasserbehandlungsvorrichtungen dieser Art haben darüber hinaus weiterhin den Vorteil, dass, insbesondere auch durch den Eintrag von Zink in das Wasser, auch ein Korrosionsschutz für die nachfolgenden Leitungen, die vom Wasser durchflossen sind, bereitgestellt wird. So besteht die Möglichkeit, mit einer derartigen Wasserbehandlungsanlage einen Korrosionsschutz, beispielsweise für die Leitungen in einem nachfolgenden Gebäude, zur Verfügung zu stellen.

Da bei der erfindungsgemäßen Anordnung der Vorschaltung einer derartigen Wasserbehandlungsvorrichtung vor eine Membranfilteranlage jedoch im Wesentlichen die Kalziumkarbonatkristalle, die sich aufgrund von Keimbildung um Zinkionen herum gebildet haben, diese Zinkionen ebenso durch die Membranfilteranlage mit aus dem Wasser ausgefiltert werden, führt eine Membranfilteranlage in der hier beschriebenen erfindungsgemäßen Reihenschaltung mit der Wasserbehandlungsvorrichtung, die der Filteranlage vorgeschaltet ist, zu einer Aufhebung oder zumindest Verringerung dieser zweiten vorteilhaften Wirkungsweise für nachfolgende Wasserleitungen.

Es ist daher bei der Erfindung weiterhin vorgesehen, der Reihenschaltung aus Wasserbehandlungsvorrichtung und Membranfilteranlage eine weitere wirkungsgleiche Wasserbehandlungsvorrichtung nachzuschalten, die dafür Sorge trägt, dass das Wasser, welches die Membranfilteranlage in gefilterter Form verlässt, nochmals mit Zinkionen angereichert wird, die sodann im Wasser verbleiben und darüber hinaus auch nochmals zu einer Kalziumkarbonatpartikelbildung beitragen.

Diese Nachschaltung einer wirkungsgleichen Wasserbehandlungsvorrichtung, bei welcher Metallionen, insbesondere Zinkionen, in das Wasser eingebracht werden, hat hier den Vorteil, dass mittels der in Strömungsrichtung nachfolgenden Wasserbehandlungsvorrichtung Metallionen / Zinkionen in das Wasser eingetragen werden, die zumindest zum Teil diejenigen Metallionen / Zinkionen ersetzen, die von der in Strömungsrichtung früheren Wasserbehandlungsanlage in das Wasser eingetragen und aufgrund von Kalziumkarbonatpartikeln an diesen Ionen als Partikelbildungskeime in der Membranfilteranlage ausgefiltert werden. So führt die in Strömungsrichtung nachfolgende Wasserbehandlungsvorrichtung zu einem Wiederaufbau der Antikorrosionswirkung, die durch die Membranfilteranlage durch das Ausfiltern der Kalziumkarbonatpartikel und somit der damit verbundenen Metallionen / Zinkkeime abgebaut wurde.

So führt die Gesamtkombination einer Reihenschaltung dieser Art, bei der eine Wasserbehandlungsvorrichtung vor- und nachgeschaltet ist, zu dem Effekt der Enthärtung des Wassers, da nunmehr mittels der Membranfilteranlage die Kalziumkarbonatpartikel ausgefiltert werden, wobei durch die nachgeschaltete Wasserbehandlungsvorrichtung weiterhin ein Korrosionsschutz für folgende Leitungselemente aufgebaut werden kann.

Nutzer einer derartigen erfindungsgemäßen Reihenschaltung profitieren demnach mehrfach von dieser erfindungsgemäßen Anordnung gegenüber der jeweiligen alleinigen Verwendung einer solchen Wasserbehandlungsvorrichtung bzw. einer Membranfilteranlage in Verbindung mit üblichen Ionentauscheranlagen zur Enthärtung, da die letztere im Stand der Technik bekannte Kombination zwar zu einer Enthärtung, nicht jedoch zum Aufbau eines Korrosionsschutzes für nachfolgende Leitungselemente führt und es darüber hinaus auch als nachteilig angesehen wird, Kalziumionen im Wasser durch Natriumionen zu ersetzen, was gegebenenfalls als gesundheitsbedenklich eingestuft werden kann.

Dabei ist es für den Einsatz der auf die Membranfilteranlage nachfolgenden Wasserbehandlungsanlage nicht in diesem Maße wesentlich, hohe Zinkionenanteile in das Wasser einzutragen, wie es für die Wasserbehandlungsanlage vor der Membranfilteranlage von Vorteil ist. Es kann daher insbesondere in der nachgeschalteten Wasserbehandlungsvorrichtung auch eine solche eingesetzt werden, die zu einer anzahlmäßig geringeren, jedoch größeren Partikelbildung führt im Vergleich zu derjenigen Anlage, die der Membranfilteranlage vorgeschaltet ist. So ist hier erkennbar, dass zwar die Wirkungsprinzipien dieser Wasserbehandlungsanlagen vor- und nachgeschalteter Art gleich sind, jedoch die Art und Weise der Partikelbildung Auswirkungen auf die Funktionsweisen hat.

Es hat sich demnach als erfindungsgemäß überraschend herausgestellt, dass Membranfilteranlagen der Mikro- oder Ultrafiltration zur Ausfilterung von Teilchen im Bereich von 1 bis 0.01 Mikrometern in einer Kombination mit einer vorgeschalteten Wasserbehandlungsvorrichtung der beschriebenen Art auch zur Wasserenthärtung eingesetzt werden können, was sich erst durch die Kombination beider Anlagenarten ergibt, da sich diese synergetisch wirkungsvoll ergänzen. Bei dem Verfahren gemäß der Erfindung führt erst die Membranfilteranlage zur Durchführung der Enthärtung, wohingegen im Stand der Technik die Enthärtung schon für den Betrieb der Membranfilteranlage vorher benötigt wurde.

In einer bevorzugten Ausführungsform des Verfahrens kann es vorgesehen sein, die zumindest in Strömungsrichtung vor der Membranfilteranlage vorgesehene Wasserbehandlungsvorrichtung derart zu konstruieren, dass Kalziumkarbonatpartikel erzeugt werden, deren Größenklassen unter 30 Quadratmikrometern die größte Häufigkeit aufweisen. So kann dies beispielsweise erzielt werden durch Beeinflussung der Menge der Zinkionen, die durch die Wasserbehandlungsvorrichtung in das Wasser eingetragen werden.

So hat sich herausgestellt, dass eine geringere Menge von Zinkionen zwar ebenfalls zur Bildung von Kalziumkarbonatpartikeln führt, es werden jedoch mengenmäßig weniger und dafür größere Kalziumkarbonatpartikel gebildet gegenüber Anlagen, die einen relativ hohen Zinkanteil in das Wasser einbringen und die demnach viele kleinere Partikel erzeugen.

Dabei hat es sich als wirkungsvoller herausgestellt, eine Vielzahl von kleinen Partikeln auszubilden in dem Bereich der hier bevorzugt genannten Größenklassen, da hierdurch im Endeffekt mehr gelöstes Kalziumkarbonat in kristalliner Form überführt werden kann, insbesondere auch deswegen, da der Kristallbildungsprozess ein Zeit in Anspruch nehmender Prozess ist und somit pro Zeiteinheit und einem höheren Anteil von Zinkionen durch die gleichzeitig einsetzende Kristallbildung effektiv mehr Kalziumkarbonat in die kristalline und hier bevorzugt aragonitische Form umgesetzt werden kann. Wasserbehandlungsvorrichtungen, die demnach Kalziumkarbonatpartikel in den Größenklassen kleiner 30 Quadratmikrometern Fläche erzeugen, sind demnach solche mit einem relativ hohen Anteil an in das Wasser eingetragenen Zinkionen und für den Einsatz in Verbindung mit Membranfilteranlagen wirkungsvoller und sicherer, da die verbleibenden gelösten Kalkreste im Wasser geringer sind gegenüber Wasserbehandlungsvorrichtungen der gleichen Wirkungsart, die jedoch überwiegend größere Partikel erzeugen.

Dabei ist es für die Wirkungsweise der Gesamtanlage wesentlich, dass die Membranfilter derart ausgewählt werden, dass diese Filterporen aufweisen, mit denen wirkungsvoll die Kalziumkarbonatpartikel der Wasserbehandlungsvorrichtung ausgefiltert werden können, die demnach also bevorzugt Membranporen aufweisen, die kleiner sind als die mit höchster Häufigkeit auftretenden Größenklassen der Kalziumkarbonatpartikel der jeweils eingesetzten Wasserbehandlungsvorrichtung.

Bei den bevorzugt erzeugten Kristallen in einer Größenklasse von 30 Quadratmikrometern Fläche ergibt sich damit bei einer vereinfacht angenommenen Kugelgeometrie der Kristalle eine geforderte Porengröße von kleiner 3 Mikrometern Durchmesser, um diese Kristalle auszufiltern. In bevorzugter Weise kann es hierbei auch vorgesehen sein, die Membranfilter in der Membranfilteranordnung hinsichtlich der Porengröße derart auszuwählen, dass neben den Kalziumkarbonatpartikeln auch Bakterien und hier insbesondere Legionellen ausgefiltert werden. Hierfür kann es bevorzugt vorgesehen sein, die Porengröße kleiner als 0,04 Mikrometer, bevorzugt in einem Bereich von 0,02 - 0,03 Mikrometer zu wählen.

In einer bevorzugten Ausbildung des Verfahrens bzw. der Vorrichtung kann es hierbei vorgesehen sein, dass die Membranfilteranlage mehrere Membranfiltern umfasst, die strömungstechnisch parallel geschaltet sind. So lässt sich hierdurch der Durchflusswiderstand effektiv verringern und dementsprechend Durchflussvorgaben leichter realisieren.

Dabei kann es vorgesehen sein, dass ein Membranfilter beispielsweise als ein Paket von Filterkapillaren, insbesondere mehrkanaligen Filterkapillaren ausgebildet ist, die zur Filtrierung des Wassers von innen nach außen von dem Wasser durchströmt sind.

Gerade derartige Filteranlagen mit Einsatz von Filterkapillaren haben den besonderen Vorteil, dass bei einer Filtrierung von innen nach außen ein reines Durchfließen der Filterkapillaren im inneren Bereich auch als Spülung zur Entfernung des anhaftenden Filterkuchens verwendet werden kann. So kann eine derartige Filterkapillare in einem Dreiwegeprinzip verwendet werden, bei dem ein Weg das Wasser in die Filterkapillare einträgt, ein Weg das gefilterte Wasser aus der Membranfilteranlage entnimmt und ein dritter Weg zum Ausschwemmen des Filterkuchens aus dem Inneren der Filterkapillare vorgesehen ist. Es besteht daher hier auch die Möglichkeit, den dritten Weg zur Ausspülung des Filterkuchens periodisch zu öffnen und somit eine automatisch Selbstwartung der Membranfilteranlage zum Zweck der Ausspülung des Filterkuchens zu realisieren.

Ein bevorzugtes Ausführungsbeispiel der Erfindung ist in der nachfolgenden Figur dargestellt.

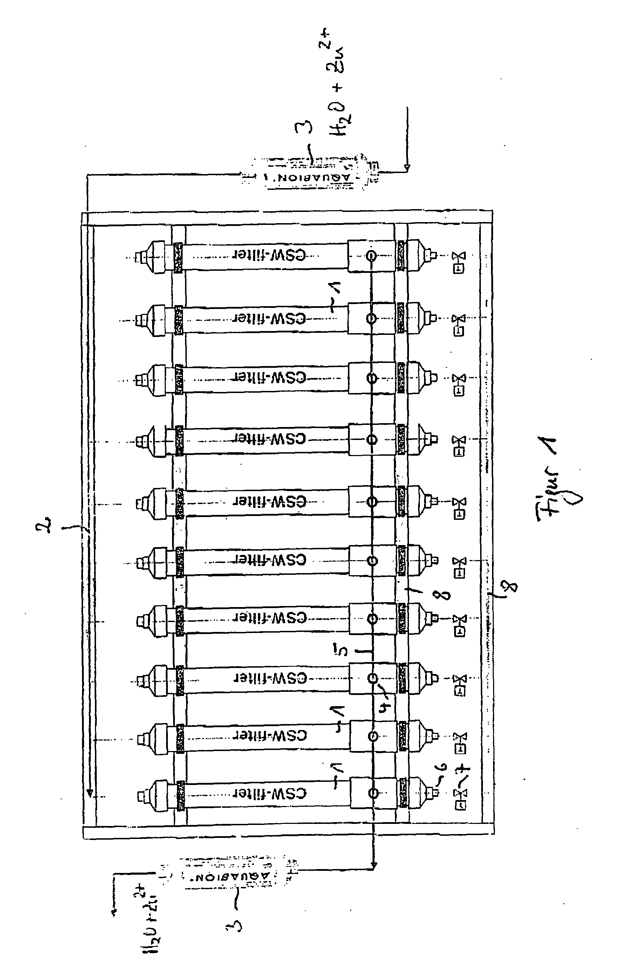

Die Figur zeigt eine Parallelschaltung von hier insgesamt 10 Membranfiltern, die eine Membranfilteranlage gemäß der Erfindung ausbilden. Dabei ist das Ausführungsbeispiel der hier gezeigten Form nicht auf die Anzahl der 10 einzelnen Membranfilter beschränkt, sondern es ist grundsätzlich jede beliebige Anzahl von Membranfiltern in einer solchen erfindungsgemäßen Anlage möglich.

Erkennbar ist hier, dass alle Membranfilter 1 einen gemeinsamen Zufluss 2 zur Zuführung von Frischwasser aufweisen. Dabei ist hier dargestellt, dass eine Wasserbehandlungsvorrichtung 3 in Strömungsrichtung vor der Membranfilteranlage aus den einzelnen Membranfiltern 1 angeordnet ist, so dass Wasser, welches somit den einzelnen Membranfiltern 1 zugeführt wird, zunächst also durch die Wasserbehandlungsvorrichtung 3 hindurchfließt.

Die hier lediglich prinzipiell dargestellte Wasserbehandlungsvorrichtung 3 bewirkt dabei ein Zuführen von Zinkionen in das durchfließende Wasser, wodurch Zinkkeime im Wasser bereitgestellt werden, an denen eine Kalziumkarbonatpartikelbildung hervorgerufen wird, so dass nachfolgend in den einzelnen Membranfiltern 1 diese Kalziumkarbonatpartikel, die bevorzugt überwiegend in der aragonitischen Kristallform vorliegen, ausgefiltert werden können. Beispielsweise kann die hier prinzipiell dargestellte Wasserbehandlungsvorrichtung 3 das Prinzip einer Opferanodenanordnung mit einer Zinkopferanode verwirklichen und ist hier bevorzugt vom Typ des Produktes mit der Markenbezeichnung AQUABION, die vom Anmelder auf den Markt gebracht wird.

Mit diesem bevorzugten Typ werden gegenüber anderen am Markt bekannten Wasserbehandlungsvorrichtungen dergleichen Wirkungsweise überwiegend Kalziumkarbonatpartikel der Aragonit-Form mit einer Häufung bei einer Größenklasse von 30 Quadratmikrometern Oberfläche oder kleiner gebildet.

Die hier dargestellte Filteranordnung hat an jedem der einzelnen Membranfilter 1 einen Wasserauslass 4, aus welchem das gefilterte Wasser austritt. Jeder dieser einzelnen Wasserauslässe 4 ist hier in einer gemeinsamen Leitung 5 zusammengeführt, die stromabwärts der Membranfilteranlage in eine weitere Wasserbehandlungsvorrichtung 3 führt, die bevorzugt die gleiche Wirkungsweise, besonders bevorzugt von identischem Aufbau wie die stromaufwärts angeordnete Wasserbehandlungsvorrichtung 3. Auch hier werden in dieser Wasserbehandlungsvorrichtung 3, die stromabwärts angeordnet ist, dem Wasser Zinkionen zugeführt, wobei hier im Wesentlichen diejenigen Zinkionen ersetzt werden, die durch die Membranfilteranlage nach der erfolgten Keimbildung und Kalziumkarbonatpartikelbildung ausgefiltert wurden.

Ein Korrosionsschutz, der durch die stromaufwärts angeordnete Wasserbehandlungsvorrichtung 3 im Wasser aufgebaut wurde, der jedoch durch die Ausfilterung in der Membranfilteranlage mit den Membranfiltern 1 abgebaut wurde, wird demnach stromabwärts durch die nach der Membranfilteranlage angeordnete gleiche, zumindest wirkungsgleiche Wasserbehandlungsvorrichtung 3, nachträglich wieder aufgebaut, wobei auch hier die Hinzufügung der Zinkionen wiederum zu einer Kalziumkarbonatpartikelbildung, überwiegend in der aragonitischen Form, hinsichtlich des verbleibenden, im Wasser gelösten Kalks führt.

Erkennbar ist hier bei der Membranfilteranlage auch, dass die einzelnen Membranfilter 1 neben dem Wasserauslass 4 für das gefilterte Wasser auch jeweils einen Auslass 6 in Verbindung mit einem Ventil 7 aufweisen, der zum Ausspülen eines Filterkuchens dient, der während des Filterprozesses an den Membranfiltern angelagert ist.

Hierfür weisen die Membranfilter 1 in bevorzugter Ausführung in dem hier gezeigten zylindrischen Gehäuse eine Ansammlung von sich parallel zueinander erstreckenden Membranfilterkapillaren, insbesondere Kapillaren mit Mehrfachbohrungen auf. So kann das Wasser durch die Zuleitung 2 in das Innere der Kapillarbohrungen zugeführt werden, wobei das Wasser durch die Kapillarwände gefiltert und somit in den Außenbereich der Kapillaren gelangt, um von dort über den Anschluss 4 des Filters in die gemeinsame Leitung 5 zu gelangen. Im Inneren der Kapillare bildet sich demnach der Filterkuchen, der über die Spülleitung 6 und das Ventil 7 in axialer Richtung der Kapillare aus diesen ausgespült werden kann, sofern hierzu ein Bedarf besteht.

Die hier gezeigte Abbildung zeigt weiterhin einen Tragrahmen 8, an dem bevorzugterweise sämtliche der einzelnen Membranfilter 1 befestigt sein können sowie bevorzugt auch die Wasserbehandlungsvorrichtungen 3, um eine Baueinheit zu bilden.

In bevorzugter Ausführung können zur Ausbildung einer erfindungsgemäßen Gesamtanlage hier die Membranfilter vom Typ CSW der Firma PB International eingesetzt werden. Der Einsatz ist jedoch nicht auf diesen Filtertyp beschränkt. Es können grundsätzlich zur Verwirklichung des erfindungsgemäßen Prinzips beliebige Membranfilter Verwendung finden. Die hier dargestellten Filter haben bevorzugt eine Porengröße von 0,03 Mikrometer, wobei für die Verwirklichung des Erfindungsprinzips auch diese Porengröße nicht zwingend ist, sondern im vorliegenden Fall ausgewählt wurde, um auch Bakterien, insbesondere Legionellen, effektiv aus dem Wasser auszufiltem.

Wesentlich ist es, die Porengröße der eingesetzten Filter, hier insbesondere der mehrkanaligen Filterkapillaren, derart auszuwählen, dass die gewünschten, im Wasser vorhanden Partikel ausgefiltert werden und insbesondere die gebildeten Kalziumkarbonatpartikel gemäß der gebildeten Größenklasse. Es ist daher sicherzustellen, dass die Porengröße der eingesetzten Filter, hier insbesondere der eingesetzten Membranfilterkapillaren, angepasst ist an die Größenklassenverteilung der durch die Wasserbehandlungsvorrichtung 3 gebildeten Kalziumkarbonatpartikel, zumindest in dem Sinne, dass die Poren kleiner sind als die Kalziumkarbonatpartikel der am häufigsten gebildeten Größenklasse.

Sofern eine Ausfilterung nicht von weiteren Stoffen, wie z.B. Bakterien, Schwebstoffen oder sonstigen Verschmutzungen durch eine solche Membranfilteranlage gewünscht ist, kann es ausreichend sein, die Poren der Membranfilter ausschließlich nur an die Partikelgröße der durch die Wasserbehandlungsvorrichtung 3 gebildeten Kalziumkarbonatpartikel anzupassen, ohne hierbei eventuelle andere Stoffe oder Bakterien zu berücksichtigen. Durch eine derartige Anlage kann demnach effektiv auch lediglich eine Wasserenthärtung durchgeführt werden, da in jedem der hier beschriebenen Fälle mittels den Membranfiltern 1 die Kalziumkarbonatpartikel ausgefiltert werden und somit nachfolgend nicht mehr zum Härtegrad des Wassers beitragen.

## Patentansprüche

1. Vorrichtung zur Behandlung von Wasser, umfassend eine Membranfilteranlage mit wenigstens einem Membranfilter (1) durch welches das Wasser zur Ausfilterung von Partikeln führbar ist, die größer sind als die Poren der wenigstens einen Membranfilteranlage (1), wobei die wenigstens eine Membranfilteranlage (1) in Strömungsrichtung in einer Reihenschaltung mit einer vorgeschalteten Wasserbehandlungsvorrichtungen (3) angeordnet Ist, mit der dem Wasser durch eine Zink-Opferanoden-Anordnung Zinkionen zuführbar sind zur zumindest teilweisen Überführung des gelösten Kalks in Calziumcarbonatpartikel, **dadurch gekennzeichnet, dass** die wenigstens eine Membranfilteranlage (1) als Mikro- oder Ultrafiltrations-Membranfilteranlage (1) zur Ausfilterung von Teilchen von 1 bis 0.01 Mikrometer ausgebildet ist, der eine wirkungsgleiche Wasserbehandlungsvorrichtung (3) nachgeschaltet ist, wobei mittels der nachgeschalteten Wasserbehandlungsvorrichtung (3) Zinkionen in das Wasser eintragbar sind, die zumindest zum Teil diejenigen Zinkionen ersetzen, die von der in Strömungsrichtung früheren Wasserbehandlungsanlage (3) in das Wasser eingetragen und aufgrund von Calziumcarbonatpartikelbildung an diesen Ionen als Partikelbildungskeime in der Mikro- oder Ultrafiltrations-Membranfilteranlage (1) ausgefiltert sind und mit denen eine Calziumcarbonatpartikelbildung des im Wasser verbliebenen gelösten Kalks erzeugbar ist.

2. Vorrichtung nach Anspruch 1, **dadurch gekennzeichnet, dass** die Membranfilteranlage mehrere Membranfilter (1) umfasst, die strömungstechnisch parallel geschaltet sind.

3. Vorrichtung nach einem der vorherigen Ansprüche, **dadurch gekennzeichnet, dass** ein Membranfilter (1) ein Paket von Filterkapillaren umfasst, die zur Filterung von innen nach außen vom Wasser durchströmt sind.

4. Vorrichtung nach einem der vorherigen Ansprüche, **dadurch gekennzeichnet, dass** die Membranfilter (1) in der Membranfilteranordnung eine Porengröße kleiner als 0,04 Mikrometer aufweisen, um neben den Calziumcarbonatpartikeln auch Bakterien auszufiltern.

5. Vorrichtung nach einem der vorherigen Ansprüche, **dadurch gekennzeichnet, dass** zumindest mit der in Strömungsrichtung vor der Membranfilteranlage (1) vorgesehene Wasserbehandlungsvorrichtung (3) Calziumcarbonatpartikel erzeugbar sind, deren Größenklassen unter 30 Quadratmikrometern die größte Häufigkeit aufweisen.

6. Vorrichtung nach Anspruch 5, **dadurch gekennzeichnet, dass** mit der nachgeschalteten Wasserbehandlungsvorrichtung im Vergleich zur vorgeschalteten Wasserbehandlungsvorrichtung eine anzahlmäßig geringere und größere Partikelbildung erzeugbar ist.

7. Verfahren zur Behandlung von Wasser, bei dem Wasser durch wenigstens eine Membranfilteranlage mit wenigstens einem Membranfilter (1) geführt wird und aus dem Wasser Partikel ausgefiltert werden, die größer sind als die Poren des wenigstens einen Membranfilters, wobei der wenigstens einen Membranfilteranlage (1) in Strömungsrichtung des Wassers eine Wasserbehandlungsvorrichtung (3) vorgeschaltet wird, in der eine Behandlung des Wassers durchgeführt wird, mit welcher durch Abgabe von Zinkionen in das Wasser in einer Zink-Opferanoden-Anordnung der im Wasser gelöste Kalk zumindest teilweise in Calziumcarbonatpartikel überführt wird, **dadurch gekennzeichnet, dass** die genannte Wasserbehandlungsvorrichtung (3) einer Mikro- oder Ultrafiltrations- Membranfilteranlage (1) zur Ausfilterung von Teilchen von 1 bis 0.01 Mikrometer in Strömungsrichtung vorgeschaltet wird und eine wirkungsgleiche Wasserbehandlungsvorrichtung (3) der Mikro- oder Ultrafiltrations-Membranfilteranlage (1) nachgeschaltet wird, wobei mittels der nachgeschalteten Wasserbehandlungsvorrichtung (3) Zinkionen in das Wasser eingetragen werden, die zumindest zum Teil diejenigen Zinkionen ersetzen, die von der in Strömungsrichtung früheren Wasserbehandlungsanlage (3) in das Wasser eingetragen und aufgrund von Calziumcarbonatpartikelbildung an diesen Ionen als Partikelbildungskeime in der Mikro- oder Ultrafiltrations-Membranfilteranlage (1) ausgefiltert wurden und mit denen eine Calziumcarbonatpartikelbildung des im Wasser verbliebenen gelösten Kalks erfolgt.

## Claims

1. Apparatus for treating water, comprising a membrane-filter installation with at least one membrane filter (1) through which the water can be routed in order for particles which are larger than the pores of the at least one membrane-filter installation (1) to be filtered out, wherein the at least one membrane-filter installation (1) is arranged in series, as seen in the direction of flow, with an upstream water-treatment apparatus (3), by means of which the water can be fed zinc ions, by a galvanic-zinc-anode arrangement, in order for at least some of the dissolved lime to be converted into calcium-carbonate particles, **characterized in that** the at least one membrane-filter installation (1) is designed as a microfiltration or ultrafiltration membrane filter installation (1) which is intended for filtering out particles of 1 to 0.01 micrometers and has an operationally identical water-treatment apparatus (3) downstream of it, wherein the downstream water-treatment apparatus (3) can be used to introduce into the water zinc ions which replace at least some of those zinc ions which have been introduced into the water by the upstream water-treatment installation (3) and have been filtered out on account of calcium carbonate particles being formed on these ions, as particle-forming nuclei, in the microfiltration or ultrafiltration membrane-filter installation (1) and by means of which the dissolved lime remaining in the water can be formed into calcium-carbonate particles.

2. Apparatus according to Claim 1, **characterized in that** the membrane-filter installation comprises a plurality of membrane filters (1) which are connected in parallel.

3. Apparatus according to one of the preceding claims, **characterized in that** a membrane filter (1) comprises an assembly of filter capillaries, through which the water flows from the inside to the outside for filtering purposes.

4. Apparatus according to one of the preceding claims, **characterized in that** the membrane filters (1) in the membrane-filter arrangement have a pore size of smaller than 0.04 micrometers, in order for bacteria also to be filtered out in addition to the calcium-carbonate particles.

5. Apparatus according to one of the preceding claims, **characterized in that** at least the water-treatment apparatus (3) provided upstream of the membrane-filter installation (1) can be used to generate calcium-carbonate particles of which the most predominant size categories are less than 30 square micrometers.

6. Apparatus according to Claim 5, **characterized in that**, in relation to the upstream water-treatment apparatus, the downstream water-treatment apparatus can be used to form smaller numbers of larger particles.

7. Method of treating water in which water is routed through at least one membrane-filter installation with at least one membrane filter (1) and particles which are larger than the pores of the at least one membrane filter are filtered out of the water, wherein the at
least one membrane-filter installation (1) has arranged upstream of it a water-treatment apparatus (3) which treats the water so that, by virtue of zinc ions being discharged into the water in a galvanic-zinc-anode arrangement, at least some of the lime dissolved in the water is converted man so, wenn einer lieb warinto calcium-carbonate particles, **characterized in that** the aforementioned water-treatment apparatus (3) is arranged upstream of a microfiltration or ultrafiltration membrane-filter installation (1) for filtering out particles of 1 to 0.01 micrometers, and an operationally identical water-treatment apparatus (3) is arranged downstream of the microfiltration or ultrafiltration membrane-filter installation (1), wherein the downstream water-treatment apparatus (3) can be used to introduce into the water zinc ions which replace at least some of those zinc ions which were introduced into the water by the upstream water-treatment installation (3) and were filtered out on account of calcium carbonate particles being formed on these ions, as particle-forming nuclei, in the microfiltration or ultrafiltration membrane-filter installation (1) and by means of which the dissolved lime remaining in the water is formed into calcium-carbonate particles.

## Revendications

1. Dispositif de traitement de l'eau, comprenant une installation de filtre à membrane, avec au moins un filtre à membrane (1) à travers lequel l'eau peut être guidée pour l'élimination par filtrage des particules qui sont plus grosses que les pores de l'au moins une installation de filtre à membrane (1), l'au moins une installation de filtre à membrane (1) étant disposée dans le sens de l'écoulement dans un montage en série avec un dispositif de traitement de l'eau (3) placé en amont, avec lequel des ions zinc peuvent être acheminés à l'eau par un agencement d'anode sacrificielle en zinc, pour transformer au moins en partie le calcaire dissous en des particules de carbonate de calcium, **caractérisé en ce que** l'au moins une installation de filtre à membrane (1) est réalisée sous forme d'installation de filtre à membrane à micro- ou ultrafiltration (1), pour l'élimination par filtrage de particules ayant une taille de 1 à 0,01 micron, laquelle installation est suivie en aval d'un dispositif de traitement de l'eau (3) de même effet, des ions zinc pouvant être introduits dans l'eau au moyen du dispositif de traitement de l'eau (3) monté en aval, lesquels ions remplacent au moins en partie les ions zinc qui ont été introduits dans l'eau par l'installation de traitement de l'eau (3) précédente dans le sens de l'écoulement, et ont éliminés par filtrage du fait de la formation de particules de carbonate de calcium sur ces ions sous forme de germes de formation particulaire dans l'installation de filtre à membrane à micro- ou ultrafiltration (1), et avec lesquels une formation de particules de carbonate de calcium du calcaire dissous et subsistant dans l'eau peut être produite.

2. Dispositif selon la revendication 1, **caractérisé en ce que** l'installation de filtre à membrane comprend plusieurs filtres à membrane (1) qui sont montés en parallèle dans une technique d'écoulement.

3. Dispositif selon l'une quelconque des revendications précédentes, **caractérisé en ce qu'**un filtre à membrane (1) comprend un paquet de capillaires de filtre qui sont parcourus pour la filtration de l'intérieur vers l'extérieur par l'eau.

4. Dispositif selon l'une quelconque des revendications précédentes, **caractérisé en ce que** les filtres à membrane (1) dans l'agencement de filtre à membrane présentent une taille de pores inférieure à 0,04 micron afin d'éliminer par filtrage également des bactéries en plus des particules de carbonate de calcium.

5. Dispositif selon l'une quelconque des revendications précédentes, **caractérisé en ce que** des particules de carbonate de calcium peuvent être produites au moins avec le dispositif de traitement de l'eau (3) prévu dans le sens de l'écoulement avant l'installation de filtre à membrane (1), leurs classes de tailles en dessous de 30 microns carrés étant majoritaires.

6. Dispositif selon la revendication 5, **caractérisé en ce qu'**une quantité plus faible, et plus importante, en nombre, de formation de particules peut être produite avec le dispositif de traitement de l'eau monté en aval, par comparaison avec le dispositif de traitement de l'eau monté en amont.

7. Procédé de traitement de l'eau dans lequel de l'eau est conduite à travers au moins une installation de filtre à membrane avec au moins un filtre à membrane (1), et des particules sont éliminées de l'eau par filtrage, lesquelles particules sont plus grosses que les pores de l'au moins un filtre à membrane, l'au moins une installation de filtre à membrane (1), dans le sens de l'écoulement de l'eau, étant précédée, en amont, d'un dispositif de traitement de l'eau (3), dans lequel un traitement de l'eau est effectué, avec lequel par dégagement d'ions zinc dans l'eau, dans un agencement d'anode sacrificielle en zinc, le calcaire dissous dans l'eau est au moins en partie transformé en particules de carbonate de calcium, **caractérisé en ce que** ledit dispositif de traitement de l'eau (3) est monté en amont, dans le sens de l'écoulement, d'une installation de filtre à membrane à micro- ou ultrafiltration (1) pour éliminer par filtrage des particules de 1 à 0,01 micron, et un dispositif de traitement de l'eau de même effet (3) est monté en aval de l'installation de filtre à membrane à micro- ou ultrafiltration (1), des ions zinc étant introduits dans l'eau au moyen du dispositif de traitement de l'eau monté en aval (3), lesquels ions remplacent au moins en partie les ions zinc qui ont été introduits dans l'eau par l'installation de traitement de l'eau (3) précédente dans le sens de l'écoulement, et ont été éliminés par filtrage du fait de la formation de particules de carbonate de calcium sur ces ions sous forme de germes de formation particulaire dans l'installation de filtre à membrane à micro- ou ultrafiltration (1), et avec lesquels une formation de particules de carbonate de calcium du calcaire dissous et subsistant dans l'eau est produite.
